# EUROPEAN PATENT SPECIFICATION

(11) **EP 2 449 071 B1**
(45) Date of publication and mention of the grant of the patent: **13.12.2017**
(21) Application number: 10734564.7
(22) Date of filing: 30.06.2010
(51) Int. Cl.: A23L 5/20, C11B 1/02

(54) **PROCESS FOR MANUFACTURING PALM OIL FRACTIONS CONTAINING VIRTUALLY NO 3-MONOCHLOROPROPANEDIOL FATTY ACID ESTERS**
VERFAHREN ZUR HERSTELLUNG VON PALMÖLFRAKTIONEN PRAKTISCH FREI VON 3-MONOCHLORPROPANDIOLFETTSÄUREESTERN
PROCÉDÉ DE PRODUCTION DE FRACTIONS D'HUILE DE PALME NE CONTENANT QUASIMENT PAS D'ESTERS D'ACIDES GRAS DE 3-MONOCHLOROPROPANEDIOL

(30) Priority: 30.06.2009 EP 09164195
(43) Date of publication of application: 09.05.2012
(73) Proprietor: Sime Darby Malaysia Berhad, Kuala Lumpur, 50350 (MY)
(72) Inventor: ZIEVERINK, Martinus Mathilda Pieter, NL- 1056 CV Amsterdam (NL); DE RUITER, Gerhard Adriaan, NL- 5473 JE Heeswijk-Dinther (NL); LATIP, Razam Bin Abdul, 42700 Banting Selangor (MY); AL KRISHNAN, Ananthan, 42500 Telok Panglima Garang Selangor (MY); HASHIM, Khairudin Bin, 42700 Banting Selangor (MY)
(74) Representative: Nederlandsch Octrooibureau
(86) International application number: PCT/MY2010/000113
(87) International publication number: WO 2011/002275

(56) References cited:
- CAMPBELL S D ET AL: "COMPARISON OF CRYSTALLIZATION PROPERTIES OF A PALM STEARIN/CANOLA OIL BLEND AND LARD IN BULK AND EMULSIFIED FORM", 1 January 2002 (2002-01-01), FOOD RESEARCH INTERNATIONAL, ELSEVIER APPLIED SCIENCE, BARKING, GB LNKD- DOI:10.1016/S0963-9969(02)00156-4, PAGE(S) 935 - 944, XP001148712, ISSN: 0963-9969 page 936, column 1, paragraph 3; table 1
- MAN Y B C ET AL: "Detection of lard adulteration in RBD palm olein using an electronic nose", 1 May 2005 (2005-05-01), FOOD CHEMISTRY, ELSEVIER LTD, NL LNKD- DOI:10.1016/J.FOODCHEM.2004.05.062, PAGE(S) 829 - 835, XP004615599, ISSN: 0308-8146 page 830, column 2, paragraph 2 table 1
- ZELINKOVA Z ET AL: "Fatty acid esters of 3-chloropropane-1,2-diol in edible oils", FOOD ADDITIVES AND CONTAMINANTS, TAYLOR AND FRANCIS, LONDON, GB LNKD- DOI:10.1080/02652030600887628, vol. 23, no. 12, 1 January 2006 (2006-01-01), pages 1290-1298, XP009125455, ISSN: 0265-203X
- Anon: "3-MCPD Esters in Food Products", February 2009 (2009-02), ILSI Europe Report Series, Brussels, Belgium, XP002608496, ISBN: 9789078637172 vol. 2009, pages 1-34, page 16 - page 17
- BERTRAND MATTHÄUS: 'Potential ways of reduction of 3-MCPD esters in vegetable oils/data on mitigation', [Online] 01 February 2009, XP055243522 Retrieved from the Internet: <URL:http://www.ilsi.org/Europe/Documents/E 2009MCPD-11.pdf> [retrieved on 2016-01-21]
- SEEFELDER W ET AL: "Esters of 3-chloro-1,2-propanediol (3-MCPD) in vegetable oils: significance in the formation of 3-MCPD", FOOD ADDITIVES AND CONTAMINANTS, TAYLOR AND FRANCIS, LONDON, GB, vol. 25, no. 4, 1 January 2008 (2008-01-01), pages 391-400, XP009125456, ISSN: 0265-203X, DOI: 10.1080/02652030701385241

## Description

### TECHNICAL FIELD OF THE INVENTION

The present invention relates to a process of manufacturing palm oil fractions containing virtually no 3-monochloropropanediol fatty acid esters (3-MCPD-esters).

### BACKGROUND OF THE INVENTION

Palm oil fractions are produced from palm oil by means of fractionation. The term "fractionation" is used to describe fractional crystallisation processes of triglycerides in which a solid high melting fraction (stearin) is separated from a liquid low melting fraction (olein). The fractionation process has two main stages, the first one being the crystallisation stage and the second one being the separation stage. During the crystallisation stage fat crystals grow when the temperature of the molten fat or its solution is lowered, and their solubility at the final or separation temperature determines the triglyceride composition of the isolated fat crystals (stearin) and of their mother liquor (olein).

Dry fractionation is the oldest type of fractionation. An alternative fractionation technique is solvent fractionation. Solvent fractionation employs an organic solvent during crystallisation in order to enhance fractionation yields.

GB-B 1 491 170 describes a process for preparing a soft palm oil which comprises degumming raw palm oil by contact with phosphoric acid, decolourising the product by contact with an adsorbent, removing free fatty acids and odour components from the resulting decoloured oil by subjecting it to steam distillation under reduced pressure, and subjecting the resulting deodorised oil to winterisation (fractionation), thereby removing higher melting materials and obtaining low melting materials.

Free 3-monochloropropane-1,2-diol (3-MCPD) has been identified as a contaminant for a long time in various foods like liquid seasoning (e.g. soy sauce) or bakery goods heated to high temperatures. This substance is formed when fat- and chloride salt-containing foods are processed at high temperatures. In animal experiments 3-MCPD has led to an increase in the cell count (hyperplasia) in renal tubules and, at higher levels, it triggered benign tumours. No genotoxic effect was observed. It can, therefore, be assumed that the tumours observed in the long-term animal study (mainly benign) only occur above a threshold value. There are no findings from human studies.

Recent studies have identified 3-MCPD fatty acid esters in refined edible fats and in fat-containing foods. 3-MCPD esters are compounds of 3-MCPD and various fatty acids which are formed at high temperatures under hydration following a reaction between fats and chloride ions. Studies by the food control authorities in Baden-

Wurttemberg showed that all refined vegetable oils and fats contain 3-MCPD fatty acid esters. Only oil that had not undergone any heat treatment (e.g. native olive oil) did not contain the substance.

Haines et al. ("Direct Determination of MCPD Fatty Acid Esters and Glycidyl Fatty Acid Esters in Vegetable Oils by LC-TOFMS", JAOCS (2011), 88, p. 1-14) also investigate the presence of MCPD esters in palm oleins or stearins. They conclude that MCPD-monoesters were not found in any of the oil samples analyzed, and that MCPD diesters were found only in samples containing palm oil, but not in all palm oil samples. The processing conditions that influence the concentration of MCPD esters and glycidyl esters are discussed therein.

Seefelder et al. in Food Additives and Contaminants, Vol. 25(4), p. 391-400 (2008) indicate that 3-MCPD are problematic in palm oils and vegetable oils which have been heat treated.

3-MCPD fatty acid esters are formed at high temperatures, probably during the deodorisation of edible fats and oils, the last stage in refining, during which undesirable odorous and taste-bearing substances are removed. Besides 3-MCPD fatty acid esters also 2-MCPD fatty esters, 1,3-dichloropropane-2-ol (1,3-DCPO) and 1,2-dichloropropane-2-ol (1,2-DCPO) fatty acid esters have been identified in heat processed foods.

No toxicological data are available on 3-MCPD fatty acid esters, nor for that matter on any of the other above mentioned propanol fatty acid esters.

Matthäus B. ("Potential ways of reduction of 3-MCPD esters in vegetable oils/data on mitigation", during the 3-MCPD Esters in Food Products ILSI Europe Workshop, 5-6 February 2009 in Brussels, Belgium) presents a research proposal for investigating potential ways of reducing 3-MCPD esters in fats and oils. Matthäus suggests decomposing 3-MCPD esters and removing them by steam distillation.

Nonetheless, it would be desirable to have available oil processing techniques that minimize formation of these unwanted chloropropanol fatty acid esters.

### SUMMARY OF THE INVENTION

The inventors have developed a process that enables the manufacture of palm oil fractions that contain virtually no 3-MCPD-esters. Unexpectedly, the inventors have discovered that the formation of 3-MCPD-esters during the production of palm oil fractions can be minimized effectively by first fractionating a crude palm oil having a low free fatty acid content and a low diglyceride content, followed by deodorisation of the crude palm oil fractions so obtained. In contrast, in conventional processes for the production of palm oil fractions, crude palm oil is deodorised before fractionation.

More specifically, the present invention provides a process of manufacturing palm oil fractions comprising:
- fractionating a crude palm oil having a free fatty acid content of less than 1.5% and a diglyceride content of less than 5.5 wt.% to produce at leaste one crude palm oil fraction, said crude palm oil fraction being selected from crude palm olein having an iodine value of at least 55 and crude palm stearin having an iodine value of less than 48; and
- deodorising the crude palm oil fraction to produce a deodorised palm oil fraction having a 3-MCPD-ester content of less than 1 ppm.

Although the inventors do not wish to be bound by theory, it is believed that the low 3-MCPD-ester levels in the palm oil fraction obtained by the present process can be realised by utilizing a crude palm oil of very low free fatty acid (FFA) content and by fractionating such crude palm oil prior to deodorisation.

The invention further provides a method of preparing a food product, said method comprising incorporating into said food product 3-99 wt.% of a palm oil fraction obtained by above described process.

### DETAILED DESCRIPTION OF THE INVENTION

Accordingly, one aspect of the invention relates to a process of manufacturing a palm oil fraction comprising:
- fractionating a crude palm oil having a free fatty acid content of less than 1.5% and a diglyceride content of less than 5.5 wt.% to produce a crude palm oil fraction, said crude palm oil fraction being selected from crude palm olein having an iodine value of at least 55 and crude palm stearin having an iodine value of less than 48; and
- deodorising the crude palm oil fraction to produce a deodorised palm oil fraction having a 3-MCPD-ester content of less than 1 ppm.

The term "oil" whenever used herein encompasses both oils that are liquid at ambient temperature and oils that are solid at ambient temperature (fats).

The crude palm oil employed in the present process typically contains at least 90 wt.% of triglycerides. Other components that may be contained in the crude palm oil in significant quantities include diglycerides, monoglycerides, fatty acids and phospholipids.

A suitable analytical method for determining 3-MCPD-ester content is described in R.Weisshaar, "Determination of total 3-chloropropane-1,2-diol (3-MCPD) in edible oils by cleavage ofMCPD esters with sodium methoxide", Eur. J. Lipid Sci. Technol. (2008) 110, 183-186. Improved analytical methods for the quantitative determination of 3-MCPD in triglyceride oils are currently being developed and validated.

The present process yields a palm oil fraction that not only has a very low 3-MCPD ester content, but wherein also the levels of glycidol fatty acid esters are much lower than in conventionally produced palm oil fractions. Glycidol fatty acid esters are believed to be a direct precursor of 3- MCPD (and 2-MCPD and 1,2-DCPO). Unfortunately, there is not yet available an analytical method that enables reliable quantification of glycidol fatty acid ester concentrations. What is believed to be the best currently available analytical technique for the determination of glycidol fatty acid esters is described by Masukawa et al. (A New Analytical Method for the Quantification of Glycidol Fatty Acid Esters in Edible Oils, J. Oleo Sci. (2010) 59(2), 81-88).

According to a particularly preferred embodiment of the present process, the deodorised palm oil fractions produced in the present process has a 3-MCPD-ester content of less than 0.8 ppm, even more preferably of less than 0.6 ppm and most preferably of less than 0.5 ppm. Preferably, the process yields a deodorised palm olein having a 3-MCPD ester content of less than 0.8 ppm and a palm stearin having a 3-MCPD ester content of less than 0.6 ppm. The very low 3-MCPD-ester contents in the deodorised palm oil fractions can be realised with the present process without using techniques for removing 3-MCPD-esters, e.g. by means of selective adsorption and/or by means of solvent extraction. In the present process the 3-MCPD ester content of the crude palm oil and the crude palm oil fraction is usually below detection limit, e.g. below 0.15 ppm. In an advantageous embodiment of the present process, the fractionation of the crude palm oil yields a crude palm olein having a 3-MCPD ester content of less than 0.15 ppm and a crude palm stearin having a 3-MCPD ester content of less than 0.15 ppm.

As explained herein before, it is believed that in order to achieve very low 3-MCPD levels in the deodorised palm oil fraction it is crucial to start from a crude palm oil having an exceptionally low FFA content. Advantageously, the FFA content of the crude palm oil does not exceed 1.3%, most preferably it does not exceed 1.2%.

The crude palm oil that is used as a starting material in the fractionation, besides having a very low FFA content, preferably also has a very low diglyceride content. Typically, the diglyceride content of the crude palm oil does not exceed 5.5 wt.%. Even more preferably, the diglyceride content does not exceed 5 wt.%. Most preferably, the diglyceride content does not exceed 4.5 wt.%.

The inventors have discovered that a low FFA crude palm oil can suitably be produced by:
- harvesting palm fruit;
- subjecting the harvested fruit to a heat treatment (e.g. steaming) to inactivate enzymes contained therein, said heating taking place within 24 hours, preferably 12 hours after the harvesting of the fruit;
- pressing said heat treated palm fruit to extract an oil-containing slurry; and
- removing water and non-oleaginous solids from said oil-containing slurry to produce a crude palm oil having a free fatty acid content of less than 1.5%.

By ensuring that the harvested palm fruit is heat treated very quickly after harvesting, formation of free fatty acids can be minimised effectively.

In the present process the time span from harvesting of the palm fruit till the deodorisation of the crude palm oil fractions typically does not exceed 4 days. Even more preferably, the latter time span does not exceed 84 hours, most preferably it does not exceed 72 hours.

Unlike conventional processes for the manufacture of palm oil fractions, in the present process degumming is suitably performed after fractionation. Thus, in accordance with a preferred embodiment, the crude palm oil fraction is subjected to degumming prior to the deodorisation. In another particularly preferred embodiment, the degummed crude palm oil fraction is subjected to bleaching prior to the deodorisation. Typically, the crude palm oil fraction is bleached to produce a bleached palm oil fraction having a Lovibond red number of less 1.5 and a Lovibond yellow number of less than 15.

The fractionation that is comprised in the present process may be carried out a dry or a wet fractionation. Preferably, the fractionation employed in the present process is a dry fractionation.

The fractionation employed in the present process advantageously uses a crystallisation temperature of less than 30°C, more preferably a crystallisation temperature in the range of 20-28°C. Typically, the olein yield of the fractionation process exceeds 50 wt.%. Most preferably, the olein yield is in the range of 60-85 wt.%.

The peroxide value of the crude palm olein obtained from the fractionation in the present process is very low, e.g. below 2, more preferably below 1.5 and most preferably below 1.

In the present process the crude palm oil is suitably deodorised at a temperature of 230-280 °C and a pressure of 0.1-4 mbar. Even more preferably, the crude palm oil is deodorised at a temperature of 250-270 °C, most preferably at a temperature of 260-265 °C. The pressure employed during deodorisation advantageously lies within the range of 0.3-2 mbar, most preferably of 0.5-1 mbar.

As explained herein before, the present process differs from conventional processes for the production of palm oil fractions in that fractionation precedes deodorisation. According to a particularly preferred embodiment, the crude palm oil is not deodorised prior to the fractionation, in other words, deodorisation is only performed after fractionation.

In a preferred embodiment of the present invention water is removed from the oil-containing slurry that is obtained after pressing the heat treated palm fruit in a clarifier that is preferably operated at 90-95 °C. The oil obtained from the clarifier is preferably dried in a vacuum drier to a moisture content of less than 0.2%.

The invention is further illustrated by means of the following examples.

### EXAMPLES

### Example 1

Marginally ripe palm fruit bunches were harvested at the Carey Island West Estate (Selangor, Malaysia). Loose fruits were kept separate and were not used in the production of low 3-MCPD ester palm fractions.

Within hours after harvesting, the fruit bunches were transported by road truck to the oil mill. Time between harvesting and onset of processing was approximately twelve hours.
The oil obtained from the fruit contained in these fruit bunches had a FFA content of 0.9%, a diglyceride content of 3.8%, and the yield of oil on the total weight of the bunches was 20%. Processing at the oil mill was carried using a state of the art procedure, i.e. heating the fruit bunches with steam to inactivate the enzymes contained in the fruit, threshing to remove the empty fruit bunches, digesting, pressing and screening to separate the crude palm oil from the fruit. followed by separation of the water/oil slurry by a clarifier. In this example, the recovery stream of the clarifier which still contains some oil was not recycled.

The clarified oil was then cleaned by mixing it with water, followed by separation in a centrifuge. Finally, the crude palm oil was vacuum dried to a moisture content of less than 0.2%.

Approximately 24 hrs after pressing at the oil mill the crude oil was transported by road tankers to Golden Jomalina Food Industries Sdn Bhd, Selangor, Malaysia.
At Jomalina, the road tankers where discharged in a dedicated storage tank.

The crude palm oil, having a FFA content of 0.9% and a diglyceride content of 3.8%, was then fractionated for 14 hrs into crude olein and crude stearin using DeSmet™ dry fractionation equipment with 74 ton fractionators. The characteristics of the crude palm oil feed and of the crude olein and the crude stearin are summarized in Table 1.

**Table 1**

| | Crude palm oil | Crude palm olein | Crude palm stearin |
|---|---|---|---|
| Yield | | 70% | 30% |
| 3-MCPD ester content | < detection limit | < detection limit | < detection limit |
| Iodine value | 51 | 57 | 37 |
| c14:0 | 1 | 1 | 1 |
| c16:0 | 45 | 39 | 57 |
| c18:0 | 4 | 4 | 5 |
| c18:1 | 38 | 43 | 27 |
| c18:2 | 10 | 11 | 8 |

The crude palm olein was semi-continuosly acid degummed with H₃PO₄ (0.08 wt%), followed by bleaching with 1.2% bleaching earth [Wac Supreme 1B by Taiko]. Essentially the same procedure was followed for the stearin.

Both fractions were separately deodorized in a 260 ton/day semi-continuous deodorizer at 265°C and 3.5 mbar.

The refined palm olein had a 3-MCPD ester content of 0.65 ppm and the refined stearin of 0.4 ppm.

### Comparative Example A

Ripe palm fruit bunches were harvested at the Carey Island West Estate (Selangor, Malaysia). Loose fruits were included in the harvest.

Time between harvesting and onset of processing was approximately 24 hours.
The oil obtained from the fruit contained in these fruit bunches had a FFA content of 2.5%, a diglyceride content of 5.5%, and the yield of oil on the total weight of the bunches and loose fruit was 21 %.

Processing at the oil mill was carried using a state of the art procedure, i.e. heating the fruit bunches with steam to inactivate the enzymes contained in the fruit, threshing to remove the empty fruit bunches, digesting, pressing and screening to separate the crude palm oil from the fruit. followed by separation of the water/oil slurry by a clarifier. In this example, the recovery stream of the clarifier which still contains some oil was recycled The clarified oil was then cleaned by mixing it with water, followed by separation in a centrifuge. Finally, the crude palm oil was vacuum dried to a moisture content of less than 0.2%.

Approximately 24 hrs after pressing at the oil mill the crude oil was transported by road tankers to Golden Jomalina Food Industries Sdn Bhd, Selangor, Malaysia.

At Jomalina, the road tankers where discharged in a dedicated storage tank.

The crude palm oil was continuously acid degummed with H₃PO₄ (0.06 wt%), followed by bleaching with 0.8 wt% bleaching earth [Wac Supreme 1B by Taiko]. The palm oil was deodorized in a 750 ton/day semi-continuous deodorizer at 265°C and 3.5 mbar.

The refined palm oil had a 3-MCPD ester content of 3.8 ppm.

The refined palm oil, having a FFA content of less than 0.1 wt.%, was then fractionated during 7 hrs into olein and stearin using DeSmet™ / Oiltech dry fractionation equipment with 35 ton fractionators. The characteristics of the refined palm oil feed and of the refined olein and stearin are summarized in Table 2.

**Table 2**

| | refined palm oil | refined palm olein | refined palm stearin |
|---|---|---|---|
| Yield | | 80 | 20 |
| 3-MCPD ester content | 3.2 | 3.5 | 2.2 |
| Iodine value | 51 | 56 | 34 |
| c14:0 | 1 | 1 | 1 |
| c16:0 | 45 | 41 | 60 |
| c18:0 | 4 | 4 | 5 |
| c18:1 | 38 | 42 | 26 |
| c18:2 | 10 | 11 | 6 |

## Claims

1. A process of manufacturing a palm oil fraction that contains virtually no 3-monochloropropanediol fatty acid esters (3-MCPD-esters), said process comprising:
• fractionating a crude palm oil having a free fatty acid content of less than 1.5% and a diglyceride content of less than 5.5 wt.% to produce at least one crude palm oil fraction, said crude palm oil fraction being selected from crude palm olein having an iodine value of at least 55 and crude palm stearin having an iodine value of less than 48; and
• deodorising the crude palm oil fraction to produce a deodorised palm oil fraction having an 3-MCPD-ester content of less than 1 ppm.

2. Process according to claim 1, wherein the crude palm oil is produced by:
• harvesting palm fruit;
• subjecting the harvested fruit to a heat treatment to inactivate enzymes contained therein, said heat treatment taking place within 24 hours, preferably 12 hours after the harvesting of the fruit;
• pressing said heat treated palm fruit to extract an oil-containing slurry; and
• removing water and non-oleaginous solids from said oil-containing slurry to produce a crude palm oil having a free fatty acid content of less than 1.5%.

3. Process according to claim 1 or 2, wherein the time span from harvesting of the palm fruit till the deodorisation of the crude palm oil fraction does not exceed 4 days.

4. Process according to any one of the preceding claims, wherein the crude palm oil fraction is subjected to degumming prior to the deodorisation.

5. Process according to claim 4, wherein the degummed crude palm oil fraction is subjected to bleaching prior to the deodorisation.

6. Process according to claim 5, wherein the crude palm oil fraction is bleached to produce a bleached palm oil fraction having a Lovibond red number of less 1.5 and a Lovibond yellow number of less than 15.

7. Process according to any one of the preceding claims, wherein the crude palm oil is deodorised at a temperature of 230-280 °C and a pressure of 0.1-4 mbar.

8. Process according to any one of the preceding claims, wherein the crude palm oil is not deodorised prior to the fractionation.

9. Process according to any one of claims 2-8, wherein water is removed form the oil-containing slurry in a clarifier.

10. Process according to claim 9, wherein the oil obtained from the decanter is dried in a vacuum drier to a moisture content of less than 0.2%.

## Patentansprüche

1. Verfahren zur Herstellung einer Palmölfraktion, die praktisch keine 3-Monochlorpropandiolfettsäureester (3-MCPD-Ester) enthält, wobei das Verfahren umfasst:
• Fraktionieren eines rohen Palmöls mit einem Gehalt an freien Fettsäuren von weniger als 1,5% und einem Diglyceridgehalt von weniger als 5,5 Gew.-%, wobei wenigstens eine rohe Palmölfraktion entsteht, wobei die rohe Palmölfraktion aus rohem Palmolein mit einem Iodwert von wenigstens 55 und rohem Palmstearin mit einem Iodwert von weniger als 48 ausgewählt ist; und
• Desodorieren der rohen Palmölfraktion, wobei eine desodorierte Palmölfraktion entsteht, die einen 3-MCPD-Ester-Gehalt von weniger als 1 ppm aufweist.

2. Verfahren gemäß Anspruch 1, wobei das rohe Palmöl hergestellt wird durch:
• Ernten von Palmfrüchten;
• Durchführen einer Wärmebehandlung der geernteten Früchte, um darin enthaltene Enzyme zu inaktivieren, wobei die Wärmebehandlung innerhalb von 24 Stunden, vorzugsweise 12 Stunden, nach dem Ernten der Früchte stattfindet;
• Pressen der wärmebehandelten Palmfrüchte, um einen ölhaltigen Brei zu extrahieren; und
• Entfernen von Wasser und nichtölhaltigen Feststoffen aus dem ölhaltigen Brei unter Bildung eines rohen Palmöls mit einem Gehalt an freien Fettsäuren von weniger als 1,5%.

3. Verfahren gemäß Anspruch 1 oder 2, wobei die Zeitspanne von der Ernte der Palmfrüchte bis zur Desodorierung der rohen Palmölfraktion 4 Tage nicht überschreitet.

4. Verfahren gemäß einem der vorstehenden Ansprüche, wobei die rohe Palmölfraktion vor der Desodorierung einer Entgummierung unterzogen wird.

5. Verfahren gemäß Anspruch 4, wobei die entgummierte rohe Palmölfraktion vor der Desodorierung einer Bleichung unterzogen wird.

6. Verfahren gemäß Anspruch 5, wobei die rohe Palmölfraktion gebleicht wird, wobei eine gebleichte Palmölfraktion mit einer Lovibond-Rotzahl von weniger als 1,5 und einer Lovibond-Gelbzahl von weniger als 15 entsteht.

7. Verfahren gemäß einem der vorstehenden Ansprüche, wobei das rohe Palmöl bei einer Temperatur von 230-280 °C und einem Druck von 0,1 bis 4 mbar desodoriert wird.

8. Verfahren gemäß einem der vorstehenden Ansprüche, wobei das rohe Palmöl vor der Fraktionierung nicht desodoriert wird.

9. Verfahren gemäß einem der Ansprüche 2 bis 8, wobei Wasser in einem Klärer aus dem ölhaltigen Brei entfernt wird.

10. Verfahren gemäß Anspruch 9, wobei das aus dem Dekanter erhaltene Öl in einem Vakuumtrockner auf einen Feuchtigkeitsgehalt von weniger als 0,2% getrocknet wird.

## Revendications

1. Procédé de fabrication d'une fraction d'huile de palme ne contenant pratiquement pas d'esters d'acides gras de 3-monochloropropanediol (esters de 3-MCPD), ledit procédé consistant à :
• fractionner de l'huile de palme brute présentant une teneur en acides gras libres inférieure à 1,5 % et une teneur en diglycérides inférieure à 5,5 % en poids pour produire au moins une fraction d'huile de palme brute, ladite fraction d'huile de palme brute étant choisie parmi une oléine de palme brute présentant un indice d'iode supérieur ou égal à 55 et une stéarine de palme brute présentant un indice d'iode inférieur à 48 ; et
• désodoriser la fraction d'huile de palme brute pour produire une fraction d'huile de palme désodorisée présentant une teneur en esters de 3-MCDP inférieure à 1 ppm.

2. Procédé selon la revendication 1, dans lequel l'huile de palme brute est produite de la façon suivante :
• récolte de fruits de palmier à huile ;
• application d'un traitement thermique aux fruits récoltés pour inactiver les enzymes qu'ils contiennent, ledit traitement thermique ayant lieu dans les 24 heures, de préférence dans les 12 heures suivant la récolte des fruits ;
• pressage desdits fruits de palmier à huile traités pour extraire une pâte huileuse ; et
• élimination de l'eau et de la matière sèche non-oléagineuse contenues dans la pâte huileuse pour produire une huile de palme brute présentant une teneur en acides gras libres inférieure à 1,5 %.

3. Procédé selon la revendication 1 ou 2, dans lequel la durée écoulée entre la récolte des fruits de palmier à huile et la désodorisation de la fraction d'huile de palme brute ne dépasse pas 4 jours.

4. Procédé selon l'une quelconque des revendications précédentes, dans lequel la fraction d'huile de palme brute est démucilaginée avant d'être désodorisée.

5. Procédé selon la revendication 4, dans lequel la fraction d'huile de palme brute démucilaginée est décolorée avant d'être désodorisée.

6. Procédé selon la revendication 5, dans lequel la fraction d'huile de palme brute est décolorée pour produire une fraction d'huile de palme décolorée présentant une valeur de rouge inférieure à 1,5 sur l'échelle Lovibond et valeur de jaune inférieure à 15 sur l'échelle Lovibond.

7. Procédé selon l'une quelconque des revendications précédentes, dans lequel l'huile de palme brute est désodorisée à une température comprise entre 230 et 280°C et à une pression comprise entre 0,1 et 4 mbar.

8. Procédé selon l'une quelconque des revendications précédentes, dans lequel l'huile de palme brute n'est pas désodorisée avant d'être fractionnée.

9. Procédé selon l'une quelconque des revendications 2 à 8, dans lequel l'eau est éliminée de la pâte huileuse dans un clarificateur.

10. Procédé selon la revendication 9, dans lequel l'huile tirée du décanteur est séchée dans un séchoir à vide jusqu'à atteindre une teneur en humidité inférieure à 0,2%.
